(19) Europäisches Patentamt
European Patent Office
Office européen des brevets

(11) EP 0 671 421 B1

(12) EUROPÄISCHE PATENTSCHRIFT

(45) Veröffentlichungstag und Bekanntmachung des Hinweises auf die Patenterteilung:
**21.05.1997 Patentblatt 1997/21**

(51) Int Cl.[6]: **C08F 222/40**, C08F 226/02, C09K 19/38, C08F 8/00, G02F 1/35

(21) Anmeldenummer: **95103026.1**

(22) Anmeldetag: **03.03.1995**

(54) **Copolymerisate auf der Basis von Dicarbonsäureimiden, Alkenylisocyanaten und/oder Alkenylurethanen**

Copolymers based on imides of dicarboxylic acids, alkenylisocyanates and/or alkenylurethanes

Copolymères à base d'imides d'acide dicarboxiliques, alkényl isocyanates et/ou alkényluréthanes

(84) Benannte Vertragsstaaten:
**DE FR GB IT**

(30) Priorität: **11.03.1994 DE 4408199**

(43) Veröffentlichungstag der Anmeldung:
**13.09.1995 Patentblatt 1995/37**

(73) Patentinhaber: **BASF AKTIENGESELLSCHAFT**
**67056 Ludwigshafen (DE)**

(72) Erfinder:
- **Beckmann, Stefan, Dr.**
  **D-67098 Bad Dürkheim (DE)**
- **Zentel, Rudolf, Prof. Dr.**
  **D-55283 Nierstein (DE)**
- **Doerr, Michael**
  **D-65207 Wiesbaden (DE)**
- **Eich, Manfred, Dr.**
  **D-64367 Mühltal (DE)**

(56) Entgegenhaltungen:
- **MACROMOL. RAPID COMMUN., Bd. 15, Dezember 1994 Seiten 935-942, M. DÖRR ET AL. 'polymers with nonlinear optical properties and high glass transition temperatures by functionalization of reactive precursors'**
- **MAKROMOL. CHEM. RAPID COMMUN., Bd. 13, 1992 Seiten 377-384, XP 000290350 W. MORMANN ET AL. 'Polymers from multifunctional isocyanates, 8 Isocyanatoalkenes as electron-rich monomers: alternating copolymers from vinyl isocyanate and maleic anhydride'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Copolymerisate auf der Basis von Dicarbonsäureimiden, Alkenylisocyanaten und/oder Alkenylurethanen, Verfahren zu ihrer Herstellung sowie ihre Verwendung in der nichtlinearen Optik.

Polymerisate mit seitenständigen nichtlinear optischen Chromophoren und deren Herstellung durch radikalisch initiierte Polymerisation von ethylenisch ungesättigten organischen Verbindungen (Methacryl- und Acrylverbindungen), die nicht linear optische (= NLO) Chromophore als Seitengruppen tragen, sind bereits bekannt und beispielsweise beschrieben von D.R. Robello in J. Polym. Sci; Part A: Polymer Chemistry 28, 1 (1990), M. Amano, T. Kaino, Electron. Lett. 26, 981 (1990) sowie G.R. Möhlmann, Synthetic Metals, 37,207 (1990), sowie in EP-A-0337405, EP-A-0334176, EP-A-0396172, FR-A-2630744 und FR-A-2597109.

In der DE-A- 41 16 594 wurde auch bereits ein Verfahren zur Herstellung von (Meth)acrylat-Polymerisaten mit seitenständigen nichtlinear optischen Chromophoren durch polymeranaloge Umsetzung von Polymerisaten des (Meth) acrylsäurechlorids mit D-ω-Hydroxyalkyl-Chromophoren vorgeschlagen. Damit derartige Polymere NLO-aktiv werden und eine hohe Suszeptibilität 2. Ordnung aufweisen, müssen die Seitengruppen im elektrischen Feld orientiert werden (vgl. P.N. Prasad, D.J. Williams, "Introduction to Nonlinear Optical Effects in Molecules and Polymers", J. Wiley and Sons, New York 1991). Dies geschieht üblicherweise im Bereich der Glastemperatur, wo die Seitengruppen sehr beweglich sind. Die im Feld erzielte Orientierung wird dann durch Abkühlung eingefroren. Ein Nachteil dieser Polymeren besteht in der zu schnellen Relaxation der orientierten Seitengruppen. Diese Relaxation verhindert derzeit noch die Herstellung von langzeitstabilen optischen Bauelementen.

Aufgabe der vorliegenden Erfindung war es daher, Copolymerisate aufzuzeigen, durch die eine Verhinderung bzw. Verlangsamung der Relaxation nach erfolgter Orientierung der nichtlinear optisch aktiven Reste in den entsprechend substituierten Copolymerisaten erreicht wird.

Demgemäß wurden Copolymerisate auf der Basis von Dicarbonsäureimiden, Alkenylisocyanaten und/oder Alkenylurethanen der allgemeinen Formel I gefunden,

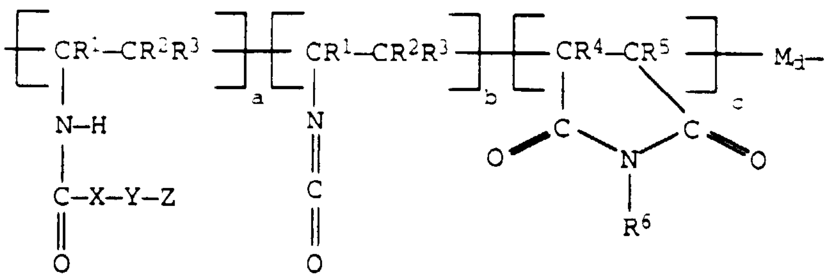

I

worin

| | |
|---|---|
| $R^1$, $R^2$, $R^3$, $R^4$ und $R^5$ | unabhängig voneinander Wasserstoff, gegebenenfalls Heteroatome enthaltendes und/oder substituiertes $C_1$-$C_{20}$-Alkyl; |
| $R^6$ | Wasserstoff, $C_1$-$C_{10}$-Alkyl, das gegebenenfalls durch Phenyl oder Hydroxy substituiert ist, $C_3$-$C_8$-Cycloalkyl, Phenyl, Benzyl, mit 1 bis 4 $C_1$- bis $C_6$-Alkyl- oder $C_1$- bis $C_6$-Alkoxygruppen substituiertes Phenyl oder Benzyl, Phenethyl, Diphenylmethyl, Naphthyl, Carbazoyl, Isobornyl, Adamantyl, 9-Fluorenyl; |
| X | O, NH; |
| Y | Methylen, Ethylen, Propylen, Isopropylen, geradkettiges oder verzweigtes $C_4$-$C_{20}$-Alkylen, |

$$-(CH_2-O)_n- ,$$

$$-(CH_2-CH_2-O)_n- ,$$

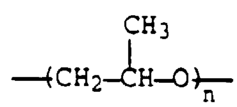

mit n=1 bis 15,

Z Wasserstoff oder ein gegebenenfalls substituierter Rest D mit nichtlinear optischen Eigenschaften;

M ein beliebiges copolymerisierbares Monomer ist, und a + b + c + d = 1 gilt, wobei

a 0,3 bis 0,7;
b 0 bis 0,3;
c 0,3 bis 0,7 und
d 0 bis 0,3 sein kann.

Gegenstand der Erfindung ist außerdem ein Verfahren zur Herstellung dieser Copolymerisate durch Reaktion von 30 bis 70 Mol-% Verbindungen der allgemeinen Formel III,

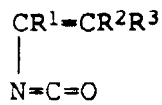

III,

mit 30 bis 70 Mol-% Verbindungen der allgemeinen Formel IV,

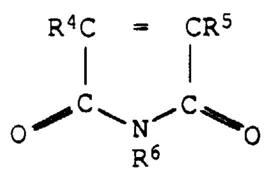

IV,

und gegebenenfalls mit bis zu 30 Mol-%, von den Verbindungen III und IV verschiedenen, weiteren Monomeren in Gegenwart von radikalbildenden Initiatoren und anschließende Umsetzung des erhaltenen Copolymerisats mit Verbindungen der Formel H-X-Y-Z, sowie die Verwendung der Copolymerisate in der nichtlinearen Optik.

Vorzugsweise hat in den erfindungsgemäßen Copolymerisaten

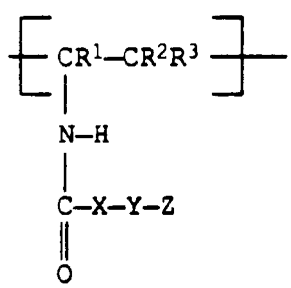

die Bedeutung

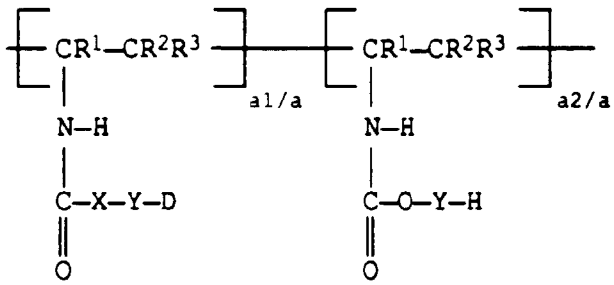

wobei

a1/a 0,1 bis 0,9 und
a2/a 0,1 bis 0,9 beträgt und
a1 + a2 = a gilt.

In den erfindungsgemäßen Copolymerisaten bedeuten $R^1$, $R^2$, $R^3$, $R^4$ und $R^5$ vorzugsweise Wasserstoff.

Als Alkenylisocyanate eignen sich erfindungsgemäß solche der allgemeinen Formel III,

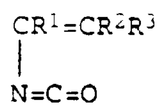

III,

worin $R^1$, $R^2$ und $R^3$ unabhängig voneinander Wasserstoff, gegebenenfalls Heteroatome enthaltendes und/oder substituiertes $C_1$-$C_{20}$-Alkyl bedeuten.

Diese Alkenylisocyanate sind an sich bekannt oder durch Umlagerungsreaktionen geeigneter Stickstoffverbindungen mit Elektronenmangel darstellbar. Das erfindungsgemäß bevorzugt eingesetzte unsubstituierte Vinylisocyanat ($R^1$=$R^2$=$R^3$=Wasserstoff) ist beispielsweise durch eine Curtius-Reaktion ausgehend von Acrylsäurechlorid zugänglich. Hierzu wird beispielsweise in einem Toluol/Wasser-Gemisch bei 0°C zunächst mittels Natriumazid aus Acrylsäurechlorid Acrylsäureazid hergestellt und dieses nach der Isolation bei 70°C thermisch zersetzt, wobei unter Stickstoffabspaltung die Curtius-Umlagerung zum Isocyanat erfolgt (vgl. W. Mormann, K. Schmalz in "Makromolekulare Chemie, Rapid Communications", Band 13, Seiten 377-384 (1992)).

Weitere Isocyanate sind beschrieben in "Journal of Macromolecular Science-Chemistry", A5(6), Seiten 1057-1062 (1971) sowie in "Journal für praktische Chemie", Band 320, Seiten 473ff. (1978). Die Verbindungen der Formel III werden in einer Menge von 30 bis 70, vorzugsweise 40 bis 65 und besonders bevorzugt 45 bis 55 Mol-% eingesetzt.

Als Dicarbonsäureimide eignen sich erfindungsgemäß Verbindungen der Formel IV,

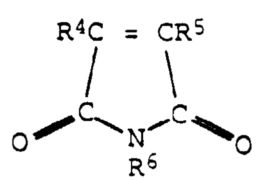

IV,

worin

$R^4$ und $R^5$ unabhängig voneinander Wasserstoff, gegebenenfalls Heteroatome enthaltendes und/oder substituiertes $C_1$-$C_{20}$-Alkyl, und

$R^6$ Wasserstoff, $C_1$-$C_{10}$-Alkyl, das gegebenenfalls durch Phenyl oder Hydroxy substituiert ist, $C_3$-$C_8$-Cycloalkyl, Phenyl, Benzyl, mit 1 bis 4 $C_1$- bis $C_6$-Alkyl- oder $C_1$- bis $C_6$-Alkoxygruppen substituiertes Phenyl oder Benzyl, Phenethyl, Diphenylmethyl, Naphthyl, Carbazoyl, Isobornyl, Adamantyl oder 9-Fluorenyl bedeuten.

In einer bevorzugten Ausführungsform der Erfindung hat $R^6$ die Bedeutung Phenyl, Benzyl, mit 1 bis 4 $C_1$- bis $C_6$-Alkyl- oder $C_1$- bis $C_6$-Alkoxygruppen substituiertes Phenyl oder Benzyl, Phenethyl, Diphenylmethyl, Naphthyl, Carbazoyl, Isobornyl, Adamantyl oder 9-Fluorenyl.

Erfindungsgemäß werden besonders bevorzugt Maleinimide, insbesondere die Maleinimide 1 - 6 eingesetzt.

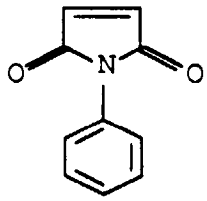

1

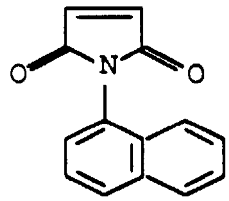

2

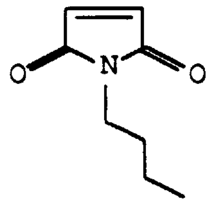

3

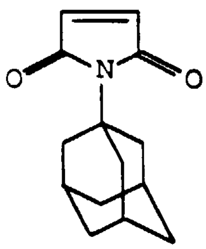

4

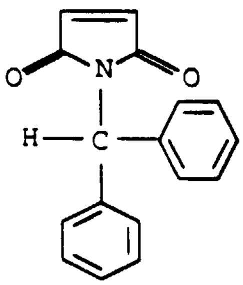

5

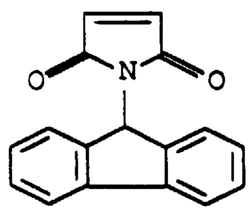

6

Die erfindungsgemäßen Maleinimide können beispielsweise nach den beiden folgenden Verfahren hergestellt werden (vgl. M. K. Hargreaves, J. G. Pritchard, H. R. Dave, Cyclic Carboxylic Monoimides, Chem. Rev. Band 70, 439 ff. (1970)): Der einfachste Weg ist die Umsetzung von Maleinsäureanhydrid mit dem entsprechenden Amin in fast quantitativer Ausbeute zum geöffneten Monosäureamid. Die Imidisierung erfolgt in der Regel in einem zweiten Schritt durch ein dehydrierendes Reagenz, wie z.B. Acetanhydrid oder Phosphorpentoxid.

z.B.:

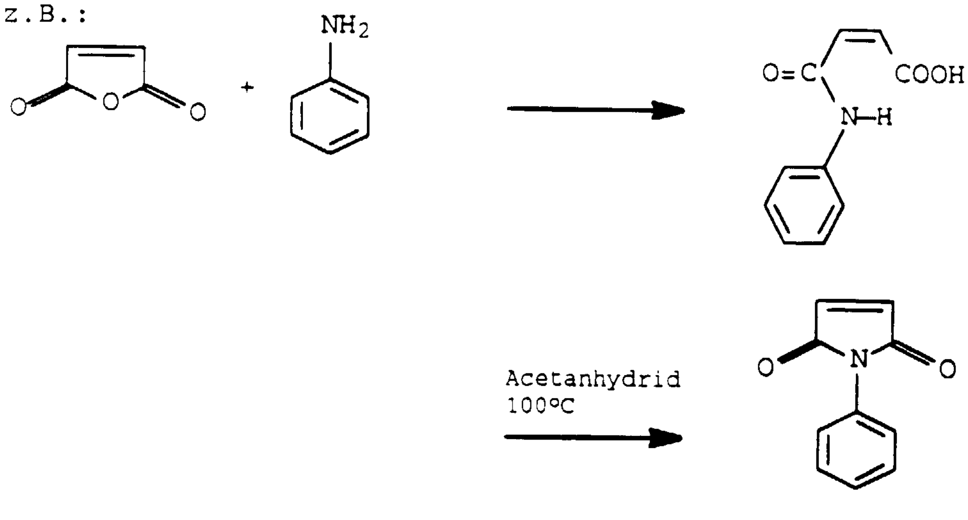


1

Dieser Syntheseweg wurde beispielsweise für die Monomeren 1, 2 und 3 vorteilhaft eingeschlagen.

Die zweite Möglichkeit ist insbesondere anwendbar für sterisch anspruchsvolle Reste $R^6$, die ein Carbokation im Übergangszustand stabilisieren können. Dazu wird aus dem unsubstituierten Maleinimid mit Silbernitrat das entsprechende Silbersalz hergestellt. Dieses wird dann mit dem gewünschten Halogenid zum N-substituierten Maleinimid umgesetzt (vgl. A. Schwartz, M. Lerner, Journal of Organic Chemistry, Vol. 39, Seiten 21 ff. (1974)). Die Monomere 4, 5 und 6 sind beispielsweise auf diese Weise in vorteilhafter Weise erhältlich.

z.B.:

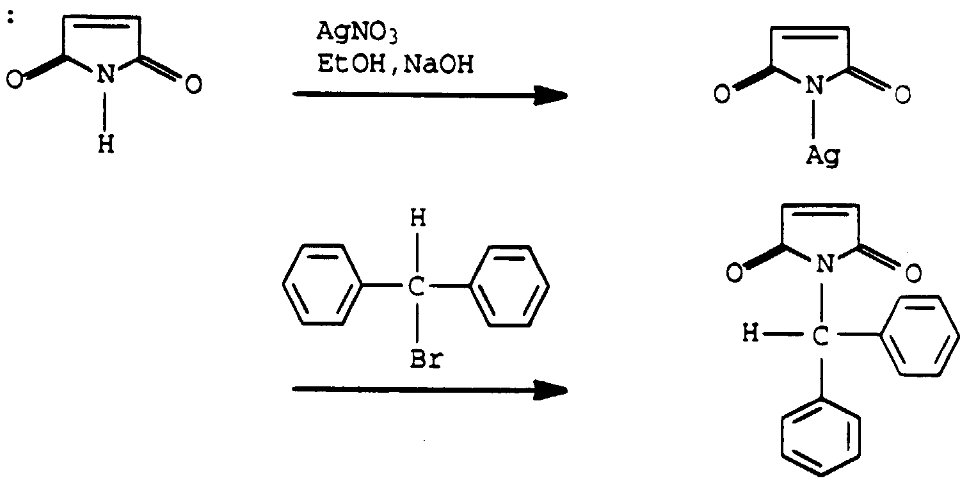


5

Die Verbindungen der Formel IV werden erfindungsgemäß in einer Menge von 30 bis 70, vorzugsweise 40 bis 65 und besonders bevorzugt 45 bis 55 Mol-% eingesetzt.

Die erfindungsgemäßen Copolymerisate enthalten gegebenenfalls ein beliebiges mit den anderen Monomeren copolymerisierbares Monomer M.

Geeignete Monomere M sind beispielsweise

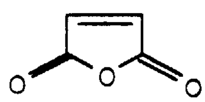
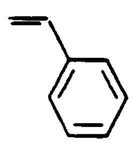
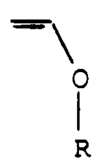
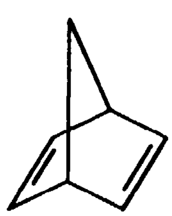
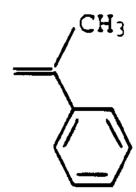
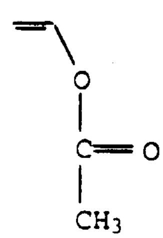

Das Monomere M wird in einer Menge von bis zu 30 Mol-%, vorzugsweise bis zu 20 Mol-% eingesetzt.

Sofern die erfindungsgemäßen Copolymerisate keine Monomeren M enthalten, liegen die sich von den Verbindungen der Formel III und IV ableitenden Monomeren in der Regel in alternierender Form im Copolymerisat vor.

Die erfindungsgemäßen Copolymerisate können beispielsweise dadurch hergestellt werden, daß die Verbindungen der Formel III, teilweise oder vollständig, zunächst mit Verbindungen der Formel H-X-Y-Z umgesetzt werden und anschließend die auf diese Weise erhaltenen, modifizierten Monomere mit Verbindungen der Formel IV und gegebenenfalls Monomeren M in Gegenwart von radikalbildenden Initiatoren umgesetzt werden. Hieran kann sich eine Umsetzung des auf diese Weise erhaltenen Copolymerisats mit weiteren Verbindungen der Formel H-X-Y-Z anschließen.

Erfindungsgemäß bevorzugt ist jedoch ein Verfahren zur Herstellung der erfindungsgemäßen Copolymerisate durch Reaktion von Verbindungen der Formel III mit Verbindungen der Formel IV und gegebenenfalls Monomeren M in Gegenwart von radikalbildenden Initiatoren und anschließende polymeranaloge Umsetzung des erhaltenen Copolymerisats mit Verbindungen der Formel H-X-Y-Z.

Die Polymerisation von Verbindungen der Formel III, IV und gegebenenfalls Monomere M wird im allgemeinen durch radikalische Copolymerisation in inerten Lösungsmitteln (z.B.: Benzol oder Toluol) bei 50 bis 90°C, vorzugsweise 60 bis 80°C mit geeigneten Initiatoren durchgeführt.

Die erfindungsgemäßen Copolymerisate enthalten vorzugsweise einen Rest X-Y-Z, bei dem Z Wasserstoff oder ein gegebenenfalls substituierter Rest D mit nichtlinear optischen Eigenschaften ist. Z ist in der Regel zu 1 bis 80 %, vorzugsweise zu 10 bis 30 % ein Rest D und zu 20 bis 99 %, vorzugsweise zu 70 bis 90 % Wasserstoff.

Als Rest D mit nichtlinear optischen Eigenschaften wird in einer bevorzugten Ausführungsform der Erfindung ein Rest mit der allgemeinen Formel V,

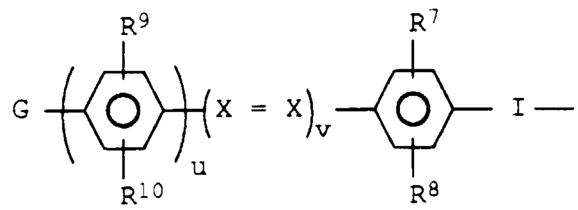

V,

worin

| | |
|---|---|
| $R^7$ bis $R^{10}$ | gleich oder verschieden sind und H, ggf. verzweigtes $C_1$-$C_{10}$-Alkyl, $C_1$-$C_{10}$-Alkoxy oder $C_3$-$C_7$-Cycloalkyl, |
| I | O, $NR^{11}$, |
| $R^{11}$ | H, $C_1$-$C_{10}$-Alkyl, $C_3$-$C_7$-Cycloalkyl, Phenyl, Benzyl, Phenethyl, |
| u und v | 0 oder 1, |
| X | CH, N und |
| G | CN, $NO_2$; Dicyanovinyl, Tricyanovinyl, CHO oder $CH=C(CO_2R^{11})$ bedeuten, eingesetzt. |

Als Rest D mit nichtlinear optischen Eigenschaften wird in einer weiteren bevorzugten Ausführungsform der Erfindung ein Rest mit der allgemeinen Formel VI,

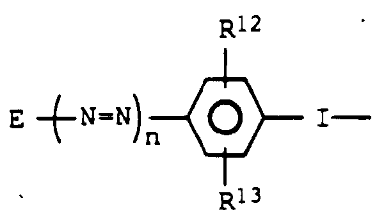

VI,

worin

| | |
|---|---|
| n | 0 oder 1, |
| $R^{12}$ und $R^{13}$ | unabhängig voneinander jeweils für Wasserstoff, ggf. verzweigtes $C_1$-$C_{10}$-Alkyl, $C_1$-$C_{10}$-Alkoxy oder $C_3$-$C_7$-Cycloalkyl steht, |
| I | O, $NR^{14}$, |

$R^{14}$ Wasserstoff, $C_1$-$C_{10}$-Alkyl, $C_3$-$C_7$-Cycloalkyl,

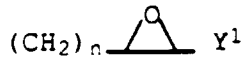 oder 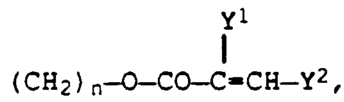

worin n 0 oder 1, $Y^1$ Wasserstoff oder Methyl und $Y^2$ Wasserstoff oder Phenyl ist,

und

E den Rest einer Diazokomponente, die sich von einem fünfgliedrigen aromatischen heterocyclischen Amin ableitet, das ein bis drei Heteroatome, ausgewählt aus der Gruppe, bestehend aus Stickstoff, Sauerstoff und Schwefel, im heterocyclischen Ring aufweist und durch einen Benzol-, Thiophen-, Pyridin- oder Pyrimidinring anelliert sein kann, bedeutet, verwendet.

Bevorzugt ist die erfindungsgemäße Verwendung von Azofarbstoffen der Formel VI, in der E für den Rest einer Diazokomponente steht, die sich von einem heterocyclischen Amin aus der Pyrrol-, Furan-, Thiophen-, Pyrazol-, Imidazol-, Oxazol-, Isoxazol-, Thiazol-, Isothiazol-, Triazol-, Oxadiazol-, Thiadiazol-, Benzofuran-, Benzothiophen-, Benzimidazol-, Benzoxazol-, Benzthiazol-, Benzisothiazol-, Pyridothiophen-, Pyrimidothiophen- oder Thienothiazolreihe ableitet.

Besonders bevorzugt ist die Verwendung von Azofarbstoffen der Formel VI, in der E für den Rest einer Diazokomponente steht, die sich von einem heterocyclischen Amin aus der Pyrrol-, Thiophen-, Pyrazol-, Thiazol-, Isothiazol-, Triazol-, Thiadiazol-, Benzothiophen-, Benzthiazol-, Benzisothiazol-, Pyridothiophen-, Pyrimidothiophen- oder Thienothiazolreihe ableitet.

Von besonderer Bedeutung ist die Verwendung von solchen Azofarbstoffen der Formel VI, in der

E für einen Rest der Formel

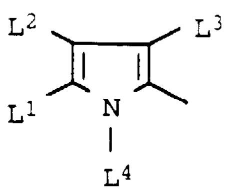
(IIa)

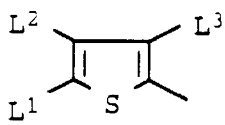
(IIb)

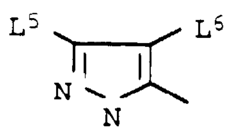
(IIc)

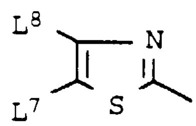
(IId)

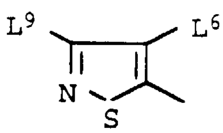
(IIe)

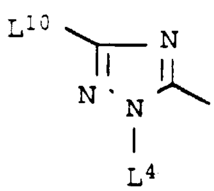
(IIf)

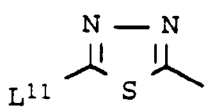
(IIg)

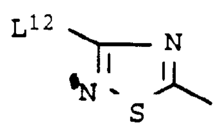
(IIh)

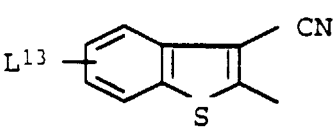
(IIi)

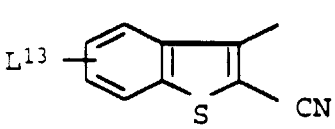
(IIj)

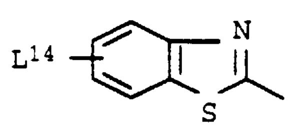
(IIk)

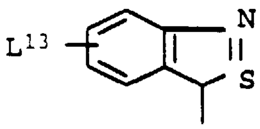

(IIl)

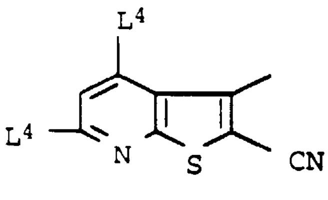

(IIm)

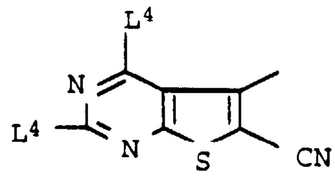

(IIn)

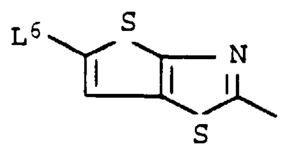

(IIo)

oder

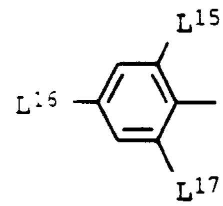

(IIp)

steht, worin

$L^1$ Nitro, Cyano, $C_1$-$C_6$-Alkanoyl, Benzoyl, $C_1$-$C_6$-Alkylsulfonyl, gegebenenfalls substituiertes Phenylsulfonyl oder einen Rest der Formel -CH=T, worin T die Bedeutung von Hydroxyimino, $C_1$-$C_4$-Alkoxyimino oder eines Restes einer CH-aciden Verbindung besitzt,

$L^2$ Wasserstoff, $C_1$-$C_6$-Alkyl, Halogen, Hydroxy, Mercapto, gegebenenfalls durch Phenyl oder $C_1$-$C_4$-Alkoxy substituiertes $C_1$-$C_6$-Alkoxy, gegebenenfalls substituiertes Phenoxy, gegebenenfalls durch Phenyl substituiertes $C_1$-$C_6$-Alkylthio, gegebenenfalls substituiertes Phenylthio, $C_1$-$C_6$-Alkylsulfonyl oder gegebenenfalls substituiertes Phenylsulfonyl,

$L^3$ Cyano, $C_1$-$C_4$-Alkoxycarbonyl oder Nitro,

$L^4$ Wasserstoff, $C_1$-$C_6$-Alkyl oder Phenyl,

$L^5$ $C_1$-$C_6$-Alkyl oder Phenyl,

$L^6$ Wasserstoff, Cyano, $C_1$-$C_4$-Alkoxycarbonyl, $C_1$-$C_6$-Alkanoyl, Thiocyanato oder Halogen,

$L^7$ Nitro, Cyano, $C_1$-$C_6$-Alkanoyl, Benzoyl, $C_1$-$C_4$-Alkoxycarbonyl, $C_1$-$C_6$-Alkylsulfonyl, gegebenenfalls substituiertes Phenylsulfonyl oder einen Rest der Formel -CH=T, worin T die obengenannte Bedeutung besitzt,

$L^8$ Wasserstoff, $C_1$-$C_6$-Alkyl, Cyano, Halogen, gegebenenfalls durch Phenyl oder $C_1$-$C_4$-Alkoxy substituiertes $C_1$-$C_6$-Alkoxy, gegebenenfalls durch Phenyl substituiertes $C_1$-$C_6$-Alkylthio, gegebenenfalls substituiertes Phenylthio, $C_1$-$C_6$-Alkylsulfonyl, gegebenenfalls substituiertes Phenylsulfonyl oder $C_1$-$C_4$-Alkoxycarbonyl,

$L^9$ Cyano, gegebenenfalls durch Phenyl substituiertes $C_1$-$C_5$-Alkyl, gegebenenfalls durch Phenyl substituiertes $C_1$-$C_6$-Alkylthio, gegebenenfalls substituiertes Phenyl, Thienyl, $C_1$-$C_4$-Alkylthienyl, Pyridyl oder $C_1$-$C_4$-Alkylpyridyl,

$L^{10}$ Phenyl oder Pyridyl,

$L^{11}$ Trifluormethyl, Nitro, $C_1$-$C_6$-Alkyl, Phenyl, gegebenenfalls durch Phenyl substituiertes $C_1$-$C_6$-Alkylthio, oder $C_1$-$C_6$-Dialkylamino,

| | |
|---|---|
| $L^{12}$ | $C_1$-$C_6$-Alkyl, Phenyl, 2-Cyanoethylthio oder 2-($C_1$-$C_4$-Alkoxycarbonyl)ethylthio, |
| $L^{13}$ | Wasserstoff, Nitro oder Halogen, |
| $L^{14}$ | Wasserstoff, Cyano, $C_1$-$C_4$-Alkoxycarbonyl, Nitro oder Halogen und |
| $L^{15}$, $L^{16}$ und $L^{17}$ | gleich oder verschieden sind und unabhängig voneinander jeweils Wasserstoff, $C_1$-$C_6$-Alkyl, $C_1$-$C_6$-Alkoxy, Halogen, Nitro, Formyl, Cyano, $C_1$-$C_4$-Alkoxycarbonyl, $C_1$-$C_6$-Alkylsulfonyl oder gegebenenfalls substituiertes Phenylsulfonyl oder $L^{16}$ auch gegebenenfalls durch Nitro substituiertes Phenylazo bedeuten. |

Alle in den obengenannten Formeln V und VI auftretenden Alkylgruppen können sowohl geradkettig als auch verzweigt sein.

Wenn in den obengenannten Formeln V und VI substituierte Phenylgruppen auftreten, können, sofern nicht anders vermerkt, als Substituenten z.B. $C_1$-$C_4$-Alkyl, Chlor, Brom, Nitro oder $C_1$-$C_4$-Alkoxy in Betracht kommen. Die Phenylreste weisen dabei in der Regel 1 bis 3 Substituenten auf.

Reste $L^2$, $L^4$, $L^5$, $L^8$, $L^9$, $L^{11}$, $L^{12}$, $L^{15}$, $L^{16}$ und $L^{17}$ sind z.B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste $L^9$ sind weiterhin z.B. Benzyl oder 1- oder 2-Phenylethyl.

Reste $L^2$, $L^8$, $L^9$ und $L^{11}$ sind weiterhin z.B. Methylthio, Ethylthio, Propylthio, Isopropylthio, Butylthio, Isobutylthio, Pentylthio, Hexylthio, Benzylthio oder 1- oder 2-Phenylethylthio.

Reste $L^2$ und $L^8$ sind weiterhin z.B. Phenylthio, 2-Methylphenylthio, 2-Methoxyphenylthio oder 2-Chlorphenylthio.

Reste $L^2$, $L^8$, $L^{15}$, $L^{16}$ und $L^{17}$ sind weiterhin z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy oder 2-Methylpentyloxy.

Reste $L^6$ sind, wie weiterhin auch Reste $L^2$, $L^8$, $L^{13}$, $L^{14}$, $L^{15}$, $L^{16}$ und $L^{17}$, z.B. Fluor, Chlor oder Brom.

Reste $L^7$ sind, wie weiterhin auch Reste $L^1$, $L^2$, $L^8$, $L^{15}$, $L^{16}$ und $L^{17}$, z.B. Methylsulfonyl, Ethylsulfonyl, Propylsulfonyl, Isopropylsulfonyl, Butylsulfonyl, Isobutylsulfonyl sec-Butylsulfonyl, Pentylsulfonyl, Isopentylsulfonyl, Neopentylsulfonyl, Hexylsulfonyl, Phenylsulfonyl, 2-Methylphenylsulfonyl, 2-Methoxphenylsulfonyl oder 2-Chlorphenylsulfonyl.

Reste $L^3$ sind, wie weiterhin auch Reste $L^6$, $L^7$, $L^8$, $L^{14}$, $L^{15}$, $L^{16}$ und $L^{17}$, z.B. Methoxycarbonyl, Ethoxycarbonyl, Propoxycarbonyl, Isopropoxycarbonyl, Butoxycarbonyl, Isobutoxycarbonyl oder secButoxycarbonyl.

Reste $L^2$ und $L^8$ sind weiterhin z.B. 2-Methoxyethoxy, 2-Ethoxyethoxy, 2- oder 3-Methoxypropoxy, 2- oder 3-Ethoxypropoxy, 2- oder 4-Methoxybutoxy, 2- oder 4-Ethoxybutoxy, 5-Methoxypentyloxy, 5-Ethoxypentyloxy, 6-Methoxyhexyloxy, 6-Ethoxyhexyloxy, Benzyloxy oder 1- oder 2-Phenylethoxy.

Reste $L^{11}$ sind weiterhin z.B. Dimethylamino, Diethylamino, Dipropylamino, Diisopropylamino, Dibutylamino, Dipentylamino, Dihexylamino oder N-Methyl-N-ethylamino.

Reste $L^{12}$ sind weiterhin z.B. 2-Methoxycarbonylethylthio oder 2-Ethoxycarbonylethylthio.

Reste $L^9$ sind weiterhin z.B. Phenyl, 2-, 3- oder 4-Methylphenyl, 2,4-Dimethylphenyl, 2-, 3- oder 4-Methoxyphenyl, 2-, 3- oder 4-Chlorphenyl, 2-, 3- oder 4-Methoxyphenyl, 2- oder 3-Methylthienyl oder 2-, 3- oder 4-Methylpyridyl.

Reste $L^1$, $L^6$ und $L^7$ sind weiterhin z.B. Formyl, Acetyl, Propionyl, Butyryl, Pentanoyl oder Hexanoyl.

Wenn $L^1$ oder $L^7$ für den Rest -CH=T stehen, worin T sich von einer CH-aciden Verbindung $H_2T$ ableitet, können als CH-acide Verbindungen $H_2T$ z.B. Verbindungen der Formel

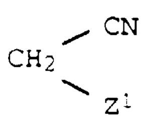

(IIIa)

,

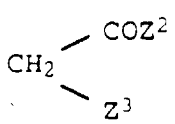

(IIIb)

,

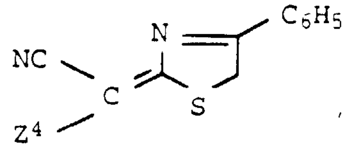

(IIIc)

,

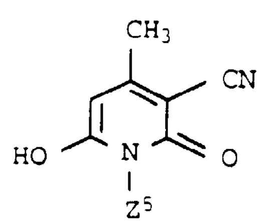

(IIId)

,

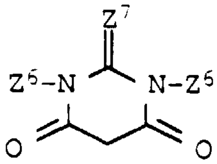
, 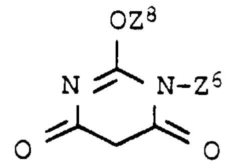 oder 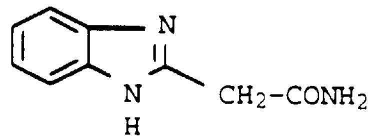

(IIIe) (IIIf) (IIIg)

in Betracht kommen, wobei

$Z^1$ Cyano, Nitro, $C_1$-$C_4$-Alkanoyl, gegebenenfalls substituiertes Benzoyl, $C_1$-$C_4$-Alkylsulfonyl, gegebenenfalls substituiertes Phenylsulfonyl, Carboxyl, $C_1$-$C_4$-Alkoxycarbonyl, $C_3$-$C_4$-Alkenyloxycarbonyl, Phenoxycarbonyl, Carbamoyl, $C_1$-$C_4$-Mono- oder Dialkylcarbamoyl, gegebenenfalls substituiertes Phenylcarbamoyl, gegebenenfalls substituiertes Phenyl, Benzthiazol-2-yl, Benzimidazol-2-yl, 5-Phenyl-1,3,4-thiadiazol-2-yl oder 2-Hydroxychinoxalin-3-yl,

$Z^2$ $C_1$-$C_4$-Alkyl, $C_1$-$C_4$-Alkoxy oder $C_3$-$C_4$-Alkenyloxy,

$Z^3$ $C_1$-$C_4$-Alkoxycarbonyl, $C_3$-$C_4$-Alkenyloxycarbonyl, Phenylcarbamoyl oder Benzimidazol-2-yl,

$Z^4$ Cyano, $C_1$-$C_4$-Alkoxycarbonyl oder $C_3$-$C_4$-Alkenyloxycarbonyl,

$Z^5$ Wasserstoff, $C_1$-$C_6$-Alkyl, $C_1$-$C_4$-Alkanoylamino oder Benzoylamino,

$Z^6$ Wasserstoff, $C_1$-$C_4$-Alkyl oder Phenyl,

$z^7$ Sauerstoff oder Schwefel und

$Z^8$ $C_1$-$C_4$-Alkyl bedeuten.

Die Azofarbstoffe der Formeln V und VI sind an sich bekannt (vgl. EP-A-0 201 896, DE-A-3 108 077, US-A-4 843 153 oder GB-A-1 546 803) oder können nach den dort genannten Methoden erhalten werden.

Die erfindungsgemäßen Copolymerisate können unvernetzt oder vernetzt sein. Durch die Vernetzung kann prinzipiell eine zusätzliche Stabilisierung der Orientierung erreicht werden. Da man in den vorhandenen Polymeren reaktive Gruppen hat, kann man ohne großen zusätzlichen Aufwand Vernetzungsreaktionen durchführen. Vorteilhaft sind hierbei Vernetzungsreaktionen, die erst bei höheren Temperaturen, vorzugsweise während der Polung, einsetzen und nicht schon während der Präparation des Copolymerisat-Films. Geeignet sind beispielsweise photochemische Vernetzungen. Hierbei sollte jedoch die Absorption für die Photoreaktion nicht von der Absorption der NLO-Chromophore überlagert sein, da die Eindringtiefe sonst gering ist und Photoreaktionen der Chromophore ablaufen können. Außerdem werden zwar viele Reaktionen nur photochemisch initiiert, aber bei höheren Temperaturen können sie auch thermisch ablaufen. Vorzugsweise wird als Vernetzungsreaktion daher beispielsweise die in der Literatur bekannte Reaktion zu Allophanaten ausgewählt, die erst bei höheren Temperaturen einsetzt.

Eine Möglichkeit zur Herstellung von erfindungsgemäßen vernetzten Copolymerisaten besteht darin, bei der polymeranalogen Reaktion mit Verbindungen der Formel H-X-Y-Z nicht alle Isocyanatgruppen umzusetzen. Dann kann beispielsweise durch die Reaktion von nicht umgesetzten Isocyanaten mit vorhandenen Urethangruppen unter Bildung von Allophanatgruppen eine Vernetzung bewirkt werden.

Eine weitere Möglichkeit der Vernetzung besteht in der Zugabe von niedermolekularen Diisocyanaten, welche mit den vorhandenen Urethanen auch zu Allophanat-Strukturen reagieren können. Beispiele sind hierfür aromatische Diisocyanate wie 4,4'-Diphenylmethandiisocyanat.

Die Erfindung hat zahlreiche Vorteile. So weisen die erfindungsgemäßen Copolymerisate hohe Glastemperaturen auf, wobei durch die Variation der Reste eine Variation der Glastemperatur bis hin zu Werten von über 200°C möglich ist. Darüber hinaus enthalten die erfindungsgemäßen Copolymerisate vernetzungsfähige Gruppierungen.

Die erfindungsgemäßen Copolymerisate eignen sich insbesondere für die Entwicklung neuer Materialien für NLO-Anwendungen durch die Orientierung der NLO-Chromophoren im elektrischen Feld.

Darüber hinaus bieten die erfindungsgemäßen Copolymerisate die Möglichkeit, durch polymeranaloge Reaktionen

zu einer Vielzahl von verschiedenen NLO-aktiven Polymeren zu gelangen, die zudem über vernetzungsfähige Gruppen verfügen können.

Weiterhin kann in den erfindungsgemäßen Copolymerisaten der Gehalt an Chromophoren mit nichtlinearen Eigenschaften über einen weiten Bereich variieren. Die entsprechenden Copolymerisate mit nichtlinear optischen Eigenschaften weisen hohe Werte für die nichtlinear optischen Effekte bei einer hohen Langzeitstabilität auf und verfügen über gute Schichtbildungseigenschaften.

Beispiele

1. Herstellung der isocyanatgruppenhaltigen Copolymerisate 11 bis 16 - Beispiele 1 bis 6

Es wurden die Copolymerisate 11 bis 16 hergestellt und anschließend in polymeranalogen Umsetzungen zu Copolymerisaten mit optisch nichtlinearen Eigenschaften umgesetzt.

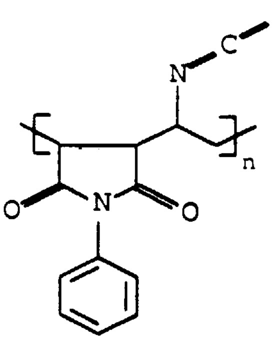

11

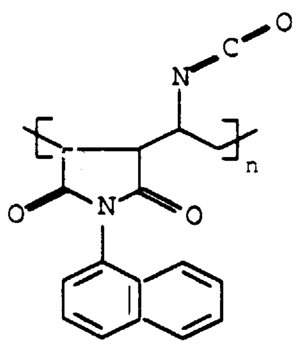

12

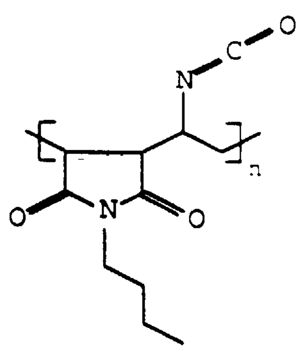

13

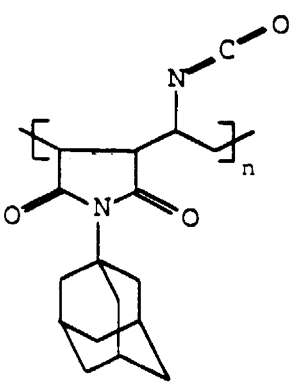

14

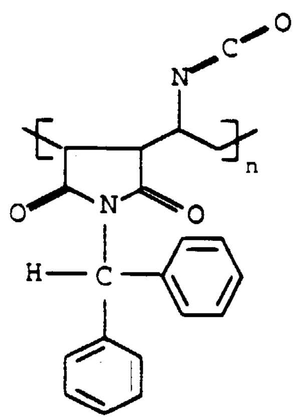

15

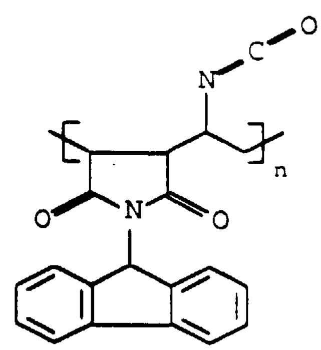

16

Beispiel 1

Herstellung von Copolymerisat 11

In einem trockenen Schlenkkolben wurden 5 g (29 mmol) N-Phenylmaleinimid und 2 g (29 mmol) Vinylisocyanat in 35 ml trockenem Toluol gelöst. Anschließend wurden 100 mg AIBN (Azoisobutyronitril) als Initiator hinzugefügt. Die Reaktionsmischung wurde eingefroren, im Vakuum entgast, mit Stickstoff belüftet und wieder aufgetaut. Anschließend wurde bei 70°C für 16 Stunden polymerisiert. Das Copolymerisat fiel während der Reaktion aus und wurde unter Stickstoff über eine Umkehrfritte abgesaugt. Zur Entfernung von restlichem Monomer wurde das Copolymerisat mit trockenem Benzol gewaschen und bei 90°C im Vakuum getrocknet. Es wurden 6,2 g (88 % d. Th.) Copolymerisat 11

als Pulver erhalten.

| | | | | | |
|---|---|---|---|---|---|
| Elementaranalyse: | gef. [%] | H: 4,45 | C: 64,66 | N: 11,39 | O: 19,50 |
| | ber. [%] | H: 4,16 | C: 64,46 | N: 11,56 | O: 19,81 |

| | | | |
|---|---|---|---|
| IR (KBr);ν[$cm^{-1}$]: | 3068 | C-H | st (arom.) |
| | 2926 | C-H | st (aliph.) |
| | 2263 | N=C=O | st as |
| | 1780,1711 | C=O | st |
| | 1597 | C=C | st (arom.) |
| | 1388 | $CH_2$ | δ |
| | 1191 | C-N | st (Imid) |
| | 755 | $CH_2$ | γ |
| | 692 | C-H | δ oop. δ (arom. monosubst.) |

Beispiel 2

Herstellung von Copolymerisat 12

Es wurde gearbeitet wie in Beispiel 1, jedoch unter Verwendung von 1,88 g (8,4 mmol) N-(1-Naphthyl)-maleinimid, 0,58 g (8,4 mmol) Vinylisocyanat und 28 mg AIBN in 60 ml Toluol. Es wurden 0,8 g (32 % d.Th.) Copolymerisat 12 als leicht gelbliches Pulver erhalten.

| | | | | | |
|---|---|---|---|---|---|
| Elementaranalyse: | gef. [%] | H: 4,61 | C: 70,14 | N: 9,45 | O: 15,80 |
| | ber. [%] | H: 4,14 | C: 69,86 | N: 9,58 | O: 16,42 |

Beispiel 3

Herstellung von Copolymerisat 13

Es wurde gearbeitet wie in Beispiel 1, jedoch unter Verwendung von 3,65 g (24 mmol) N-n-Butylmaleinimid, 1,65 g (24 mmol) Vinylisocyanat und 80 mg AIBN in 35 ml Toluol. Es wurden 4,45 g (83 % d.Th.) Copolymerisat 13 als weißes Pulver erhalten.

| | | | | | |
|---|---|---|---|---|---|
| Elementaranalyse: | gef. [%] | H: 6,42 | C: 59,63 | N: 12,52 | O: 21,43 |
| | ber. [%] | H: 6,35 | C: 59,45 | N: 12,60 | O: 21,60 |

| | | | |
|---|---|---|---|
| IR (KBr);ν[$cm^{-1}$]: | 2962,2938,2875 | C-H | st |
| | 2264 | N=C=O | st as |
| | 1777,1697 | C=O | st |
| | 1440,1405,1350 | $CH_2$ | δ |
| | | $CH_3$ | δ sy |
| | 1193 | C-N | st (Imid) |
| | 744 | $CH_2$ | γ |

Beispiel 4

Herstellung von Copolymerisat 14

Es wurde gearbeitet wie in Beispiel 1, jedoch unter Verwendung von 0,5 g (2,2 mmol) H-(1-Adamantyl)maleinimid, 0,2 g (2,9 mmol) Vinylisocyanat und 7 mg AIBN in 20 ml Toluol. Das Copolymerisat wurde mit trockenem Petrolether ausgefällt, durch Zentrifugieren abgetrennt und anschließend bei 90°C im Vakuum getrocknet. Es wurden 0,5 g (77 % d.Th.) Copolymerisat 14 als weißes Pulver erhalten.

| | | | | | |
|---|---|---|---|---|---|
| Elementaranalyse: | gef. [%] | H: 6,90 | C: 68,11 | N: 9,15 | O: 15,84 |
| | ber. [%] | H: 6,71 | C: 67,98 | N: 9,33 | O: 15,98 |

Beispiel 5

Herstellung von Copolymerisat 15

Es wurde gearbeitet wie in Beispiel 1, jedoch unter Verwendung von 1,5 g (5,7 mmol) N-Diphenylmethylmaleinimid, 0,4 g (5,7 mmol) Vinylisocyanat und 20 mg AIBN in 10 ml Toluol. Außerdem blieb das Copolymerisat größtenteils in Lösung, so daß es nach beendeter Polymerisation mit trockenem Diethylether ausgefällt wurde. Das Copolymerisat wurde anschließend durch Zentrifugieren abgetrennt und bei 90°C im Vakuum getrocknet. Es wurden 1,5 g (80 % d. Th.) Copolymerisat 15 als weißes Pulver erhalten.

$^1$H-NMR: 1,62 (2H); 2,0-3,4 (max bei 2,4 u. 2,8); 3,7-5,0 (max. 4,4, 1H); 6,3-6,6 (1H); 6,7-7,6 (1OH)

| | | | | | |
|---|---|---|---|---|---|
| Elementaranalyse: | gef. [%] | H: 4,90 | C: 72,40 | N: 8,21 | O: 14,49 |
| | ber. [%] | H: 4,85 | C: 72,28 | N: 8,43 | O: 14,44 |

| | | | |
|---|---|---|---|
| IR (KBr);$\nu$[$cm^{-1}$]: | 3092,3068,3037 | C-H | st (arom.) |
| | 2925,2854 | C-H | st (aliph.) |
| | 2261 | N=C=O | st as |
| | 1779,1708 | C=O | st |
| | 1603,1586 | C=C | st (arom.) |
| | 1450,1388,1360 | $CH_2$ | $\delta$ |
| | 1193,1173 | C-N | st (Imid) |
| | 744 | $CH_2$ | $\gamma$ |
| | 699 | C-H | $\delta$ oop. $\gamma$ (arom.) |

Beispiel 6

Herstellung von Copolymerisat 16

Es wurde gearbeitet wie in Beispiel 1, jedoch unter Verwendung von 1,25 g (4,8 mmol) N-(9-Fluorenyl)maleinimid, 0,33 g (4,8 mmol) Vinylisocyanat und 16 mg AIBN in 20 ml Toluol. Außerdem blieb das Copolymerisat größtenteils in Lösung, so daß es nach beendeter Polymerisation mit trockenem Diethylether ausgefällt, durch Zentrifugieren abgetrennt und bei 90°C im Vakuum getrocknet wurde. Es wurden 0,8 g (50 % d.Th.) Copolymerisat 16 als weißes Pulver erhalten.

$^1$H-NMR: 1,8 (2H); 2,0-3,5 (max.); 5,5-6,5 (1H); 6,5-8,2 ();

| | | | | | |
|---|---|---|---|---|---|
| Elementaranalyse: | gef. [%] | H: 4,15 | C: 72,85 | N: 8,52 | O: 14,48 |
| | ber. [%] | H: 4,27 | C: 72,72 | N: 8,48 | O: 14,53 |

| | | | |
|---|---|---|---|
| IR (KBr);ν[$cm^{-1}$]: | 3068,3044,3021 | C-H | st (arom.) |
| | 2921 | C-H | st (aliph.) |
| | 2259 | N=C=O | st |
| | 1778,1708 | C=O | st |
| | 1611 | C=C | st (arom.) |
| | 1452,1386 | $CH_2$ | δ |
| | 1202,1173 | C-N | st (Imid) |
| | 740 | $CH_2$ | γ |
| | 694 | C-H | δ oop. γ (arom.) |

2. Polymeranaloge Umsetzungen der Copolymerisate 11 bis 16 mit NLO-Chromophoren

Die Copolymerisate 11 bis 16 wurden mit den nichtlinear optische Eigenschaften aufweisenden Nukleophilen 8, 9 und 10 umgesetzt, die einen hydroxylgruppenhaltigen $C_2$-Spacer enthalten und gemäß B.T.M. Leslie, Mol. Cryst. Liq. Crystals, Volume 153, pp. 451 (1987) erhältlich sind.

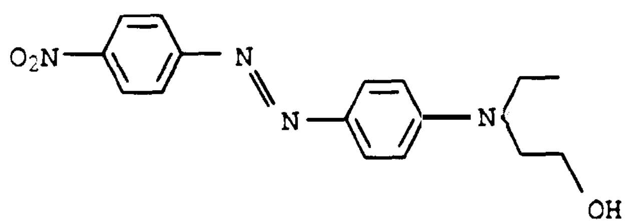

8

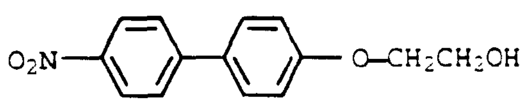

9

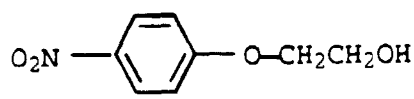

10

Hierzu wurden das jeweilige Copolymerisat und der Chromophor in trockenem Methylenchlorid gelost und bei 40°C mehrere Tage gerührt. Nach beendeter Reaktion wurde Methanol im Überschuß dazugegeben und für weitere 24 Stunden gerührt, um die restlichen Isocyanatgruppen umzusetzen.

Der Einbau des Chromophoren war leicht anhand des IR-Spektrum zu verfolgen. Die Isocyanatbande verschwand und die Carbonylbande war durch die hinzukommende Streckschwingung des Urethans (ca. 1730 $cm^{-1}$) verbreitert. Außerdem erschien durch die N-H-Schwingung eine breite Bande zwischen 3100 und 3600 $cm^{-1}$. Der Einbau des Farbstoffs konnte anhand der intensiveren Aromaten-Schwingungen bei 1587 und 1600 $cm^{-1}$ und dem zusätzlichen Auftauchen der Nitroschwingungen bei 1339 $cm^{-1}$ verfolgt werden.

Das erhaltene Copolymerisat wurde in Diethylether ausgefällt und anschließend in einem Soxhlet-Extraktor mit Ether bzw. Petrolether extrahiert um etwa noch vorhandene Verunreinigungen mit unumgesetzten Chromophoren zu entfernen. Das auf diese Weise jeweils erhaltene, Chromophore chemisch gebunden enthaltende Copolymerisat wurde anschließend in einer Menge an Methylenchlorid gelöst, die ausreichend war, um eine niedrigviskose Lösung zu erhalten, die durch 0,2 μ Mikrofilter gepreßt werden konnte. Die filtrierte Lösung wurde eingeengt, erneut ausgefällt und im Vakuum bei 100°C getrocknet.

Die bei den einzelnen Umsetzungen verwandten Mengen sind in der Tabelle zusammengefaßt. In der Tabelle ist

zusätzlich der auf die ursprünglich vorhandenen Isocyanatgruppen bezogene prozentuale Chromophorgehalt der erhaltenen Copolymerisate angegeben. Die Bestimmung des Chromophorgehaltes erfolgte UV-spektroskopisch unter Benutzung von Konzentrationsreihen des niedermolekularen Farbstoffes. Beispielsweise wurde im Falle des Chromophors 8 die breite intensive Absorptionsbande bei $\lambda_{max}$ = 480 nm verwendet.

Das folgende Schema illustriert für Copolymerisat 15 die durchgeführten Umsetzungen sowie die Struktur der resultierenden NLO-aktiven Copolymerisate.

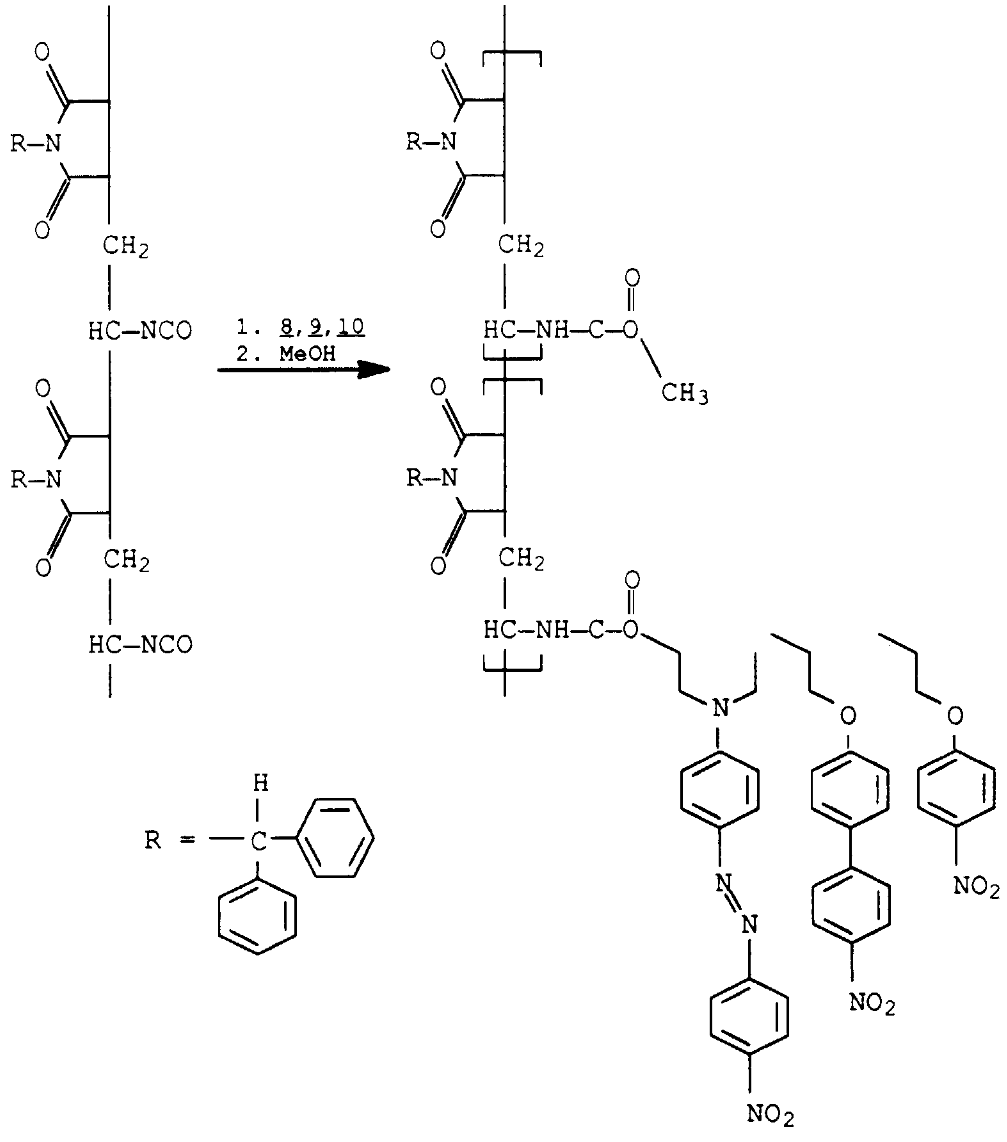


21 22 23

Ergänzend wurden die Copolymerisate 11 bis 16 mit sterisch anspruchslosen Nukleophilen umgesetzt. Hierzu wurden jeweils 242 mg (0,5 mmol) der Copolymerisate 11 bis 16 mit einem Überschuß an Methanol oder Ethanol sowie der Copolymerisate 11 und 13 mit einem Überschuß an n-Propylamin in 15 ml trockenem Methylenchlorid zu den entsprechenden Urethanen bzw. Harnstoffderivaten umgesetzt. Die bei Raumtemperatur durchgeführten Reaktionen dauerten bis zur vollständigen Umsetzung der Isocyanatgruppen in Abhängigkeit von der Löslichkeit des Copolymerisats jeweils 24 bis 48 Stunden. Im IR-Spektrum konnte die Vollständigkeit der Reaktion anhand des Verschwindens der intensiven Isocyanatbande bei ca. 2260 $cm^{-1}$ überprüft werden.

Tabelle

| Bsp. | Copolymerisat | Menge mg (mmol) | Chromophor | Menge mg (mmol) | $CH_2Cl_2$ ml | Methanol ml | Reaktionsdauer Tage | Ausbeute mg | Farbstoffgehalt % |
|---|---|---|---|---|---|---|---|---|---|
| 7 | 15 | 167(0,5) | 10 | 18(0,1) | 10 | 1 | 6 | 154 | 20 |
| 8 | 15 | 167(0,5) | 9 | 26(0,1) | 10 | 1 | 10 | 165 | 20 |
| 9 | 15 | 167(0,5) | 8 | 31,4(0,1) | 10 | 1 | 10 | 165 | 20 |
| 10 | 15 | 206(0,62) | 8 | 24,3(0,77) | 20 | 1 | 6 | 190 | 10 |
| 11 | 15 | 100(0,3) | 8 | 94(0,3) | 10 | 1 | 6 | 112 | 23 |
| 12 | 15 | 500(1,5) | 8 | 157(0,5) | 15 | 2 | 6 | 562 | - |
| 13 | 11 | 484(2,0) | 8 | 78,5(0,25) | 50 | 2 | 8 | 450 | 6 |
| 14 | 13 | 300(1,24) | 8 | 48,6(0,16) | 50 | 2 | 8 | 288 | 2,5 |
| 15 | 13* | 111(0,5) | 8 | 78,5(0,167) | 15 | 1 | 8 | 125 | 7 |
| 16 | 13** | 1000(4,5) | 8 | 212(0,67) | 50 | 4 | 8 | 900 | - |

* die Reaktionsmischung enthielt zusätzlich 0,1 ml Triethylamin

** die Reaktionsmischung enthielt zusätzlich 25 ml Toluol

3. NLO-Messungen

An den Copolymerisaten der Beispiele 12 und 13 wurden polungsdynamische (in-situ) Messungen durchgeführt, wobei die Copolymerisate mittels einer Corona-Polung gepolt wurden. Dazu wurde das zu untersuchende Copolymerisat auf einen mit ITO (Indium-Zinn-Oxid) beschichteten Träger, der als die eine Elektrode diente, aufgebracht. Über der Probe war eine Nadel oder ein Draht befestigt, an den eine Hochspannung (ca. 5 kV) gegenüber der ITO-Schicht angelegt war. Die im Zwischenraum befindlichen Gasmoleküle wurden ionisiert und sammelten sich auf der wenig leitfähigen Polymerschicht an, so daß im Copolymerisat ein elektrisches Feld entstand, in dem sich Moleküle mit permanentem Dipolmoment ausrichteten. Wurde die Hochspannung abgeschaltet, blieb immer eine Restladung auf der Probenoberfläche, die noch einen Beitrag zum SHG-Signal lieferte. Nach Beseitigung dieser Oberflächenladung durch Abwischen mit einem mit Ethanol getränkten Tuch wurde das durch die Polung erreichte SHG-Signal beobachtet. Der Auf- und Abbau der Oberflächenladung wirkte sich auch während der Messung auf die Kurve in Form von Signalschwankungen aus.

Für die Messungen wurde ein Neodym-YAG Laser mit einer Wellenlänge von 1064 nm verwendet. Das hiermit erzeugte Laserlicht wurde durch Filter in seiner Intensität abgeschwächt, damit das Signal der ersten Oberwelle nicht zu groß war und die Probe zerstören konnte, denn der Chromophor 8 absorbiert bei der Wellenlänge des frequenzverdoppelten Lichts schon merklich. Nach dem Durchgang wurde die Grundwelle über einen Filter ausgekoppelt und das verbleibende Signal bei der doppelten Frequenz mit einem Photomultiplier registriert.

Aus einer 20 gew.-%igen Lösung des Copolymerisats von Beispiel 12 (Glastemperatur $T_g$= 163°C) in Cyclohexanon wurden bei 1500 U/min Filme auf ITO beschichtete Glasträger gespincoated. Diese wurden bei 130°C im Vakuum getrocknet und ergaben eine gewünschte Filmdicke von etwa 2 $\mu$m. Die Polungsversuche wurden bei verschiedenen Temperaturen ober- und unterhalb der Glastemperatur durchgeführt. Dabei wurde eine Spannung von 5 kV zur Corona-Polung angelegt. Auch nach der Polung zeigten die Filme noch eine gute optische Qualität.

Eine charakteristische Größe für die Beweglichkeit der Chromophore ist die Zeitkonstante $\tau$ für den Anstieg des SHG-Signals. Je kleiner die Zeitkonstante, desto schneller ist das Ansteigen des SHG-Signals und somit die Beweglichkeit. In erster Näherung wird diese Zeitkonstante durch ein einfaches Exponentialverhalten (single-exponential) bestimmt.

Die Polungsmessungen wurden bei 180°C, also über der Glastemperatur und bei 150°C, also unter bzw. im Bereich der Glastemperatur durchgeführt. Der Sättigungswert des SHG-Signals bei 180°C war größer als bei der Polung bei 150°C. Aus den gemessenen Kurven wurde für T= 180°C die Zeitkonstante $\tau$ zu 0,73 $min^{-1}$, und für 150°C zu 1 $min^{-1}$ bestimmt. Ein weiterer Unterschied beim Polen ober- und unterhalb von Tg zeigte sich bei einer logarithmischen Auftragung. Der Anstieg des SHG-Signals bei 150°C war bei dieser Auftragung etwa linear bis zur Sättigung. Bei 180°C waren deutlich zwei verschiedene Steigungen zu beobachten. Dies bedeutet, daß hier kein single-exponential Verhalten vorlag und das Modell bei einer besseren Näherung um eine weitere Zeitkonstante zu erweitern wäre, um das Verhalten besser zu beschreiben.

Kühlte man die Probe bei angeschaltetem Feld langsam ab, wurde die erzeugte Orientierung eingefroren und es konnte die Langzeitstabilität des SHG-Signals bei verschiedenen Temperaturen untersucht werden. Das SHG-Signal hatte nach 45 Minuten noch 97 % seiner Ausgangsintensität. Die Orientierung im Copolymerisat erwies sich somit als sehr stabil. Hohe Langzeitstäbilitäten wurden auch bei der Untersuchung des Copolymerisats von Beispiel 13 (Tg ≈ 200°C) gefunden.

**Patentansprüche**

1. Copolymerisate auf der Basis von Dicarbonsäureimiden, Alkenylisocyanaten und/oder Alkenylurethanen der allgemeinen Formel I,

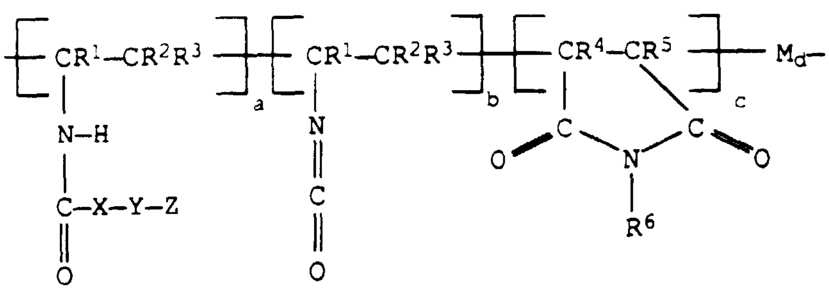

I

worin

| | |
|---|---|
| $R^1$, $R^2$, $R^3$, $R^4$ und $R^5$ | unabhängig voneinander Wasserstoff, gegebenenfalls Heteroatome enthaltendes und/oder substituiertes $C_1$-$C_{20}$-Alkyl; |
| $R^6$ | Wasserstoff, $C_1$-$C_{10}$-Alkyl, das gegebenenfalls durch Phenyl oder Hydroxy substituiert ist, $C_3$-$C_8$-Cycloalkyl, Phenyl, Benzyl, mit 1 bis 4 $C_1$- bis $C_6$-Alkyl- oder $C_1$-bis $C_6$-Alkoxygruppen substituiertes Phenyl oder Benzyl, Phenethyl, Diphenylmethyl, Naphthyl, Carbazoyl, Isobornyl, Adamantyl, 9-Fluorenyl; |
| X | O, NH; |
| Y | Methylen, Ethylen, Propylen, Isopropylen, geradkettiges oder verzweigtes $C_4$-$C_{20}$-Alkylen, |

$$-(CH_2-O)_n- ,$$

$$-(CH_2-CH_2-O)_n- ,$$ 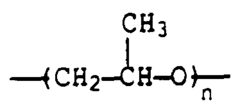

mit n=1 bis 15,

| | |
|---|---|
| Z | Wasserstoff oder ein gegebenenfalls substituierter Rest D mit nichtlinear optischen Eigenschaften; |
| M | ein beliebiges copolymerisierbares Monomer ist, und a + b + c + d - 1 gilt, wobei |

a 0,3 bis 0,7;
b 0 bis 0,3;
c 0,3 bis 0,7 und
d 0 bis 0,3 sein kann.

**2.** Copolymerisate nach Anspruch 1, dadurch gekennzeichnet, daß

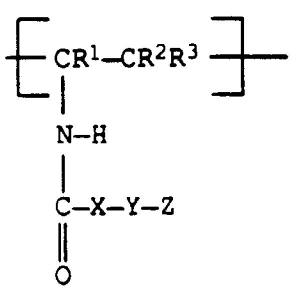

die Bedeutung

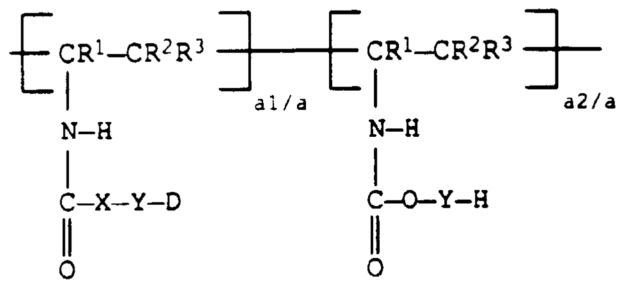

hat, wobei

a1/a 0,1 bis 0,9 und
a2/a 0,1 bis 0,9 beträgt und
a1 + a2 = a gilt.

3. Copolymerisate nach Anspruch 1 oder 2, dadurch gekennzeichnet, daß $R^6$ Phenyl, Benzyl, mit 1 bis 4 $C_1$- bis $C_6$-Alkyl- oder $C_1$- bis $C_6$-Alkoxygruppen substituiertes Phenyl oder Benzyl, Phenethyl, Diphenylmethyl, Naphthyl, Carbazoyl, Isobornyl, Adamantyl oder 9-Fluorenyl bedeutet.

4. Copolymerisate nach einem der Ansprüche 1 bis 3, dadurch gekennzeichnet, daß $R^1$, $R^2$, $R^3$, $R^4$ und $R^5$ Wasserstoff bedeuten.

5. Verfahren zur Herstellung von Copolymerisaten gemäß Anspruch 1 durch Reaktion von 30 bis 70 Mol-% Verbindungen der allgemeinen Formel III,

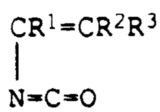

III,

mit 30 bis 70 Mol-% Verbindungen der allgemeinen Formel IV,

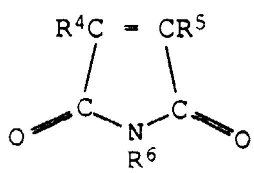

IV,

und gegebenenfalls mit bis zu 30 Mol-% von den Verbindungen III und IV verschiedenen weiteren Monomeren in Gegenwart von radikalbildenden Initiatoren und anschließende Umsetzung des erhaltenen Copolymerisats mit Verbindungen H-X-Y-Z.

6. Verwendung von Copolymerisaten gemäß einem der Ansprüche 1 bis 4 in der nichtlinearen Optik.

## Claims

1. A copolymer based on dicarboximides, alkenyl isocyanates and/or alkenylurethanes of the formula I

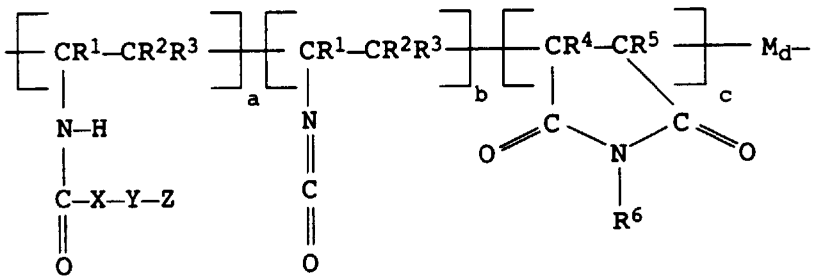

I

where

$R^1$, $R^2$, $R^3$, $R^4$ and $R^5$, independently of one another, are each hydrogen or $C_1$-$C_{20}$-alkyl which may contain hetero atoms and/or may be substituted;

$R^6$ is hydrogen or $C_1$-$C_{10}$-alkyl which is unsubstituted or substituted by phenyl or hydroxyl, or is $C_3$-$C_8$-cycloalkyl, or is phenyl or benzyl, each of which is unsubstituted or substituted by 1 to 4 $C_1$-$C_6$-alkyl or $C_1$-$C_6$-alkoxy groups, or is phenethyl, diphenylmethyl, naphthyl, carbazoyl, isobornyl, adamantyl or 9-fluorenyl;

X is O or NH;

Y is methylene, ethylene, propylene, isopropylene, straight-chain or branched $C_4$-$C_{20}$-alkylene,

$-(CH_2-O)_n-$ ,

$-(CH_2-CH_2-O)_n-$ , 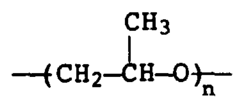

where n is from 1 to 15,

Z is hydrogen or an unsubstituted or substituted radical D having nonlinear optical properties;

M is any copolymerizable monomer and
a + b + c + d = 1, where

a and c may each be from 0.3 to 0.7 and
b and d may each be from 0 to 0.3.

**2.** A copolymer as claimed in claim 1, wherein

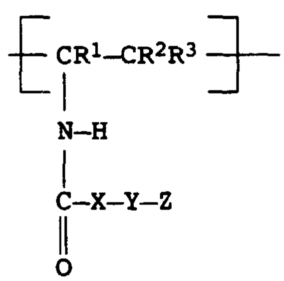

is

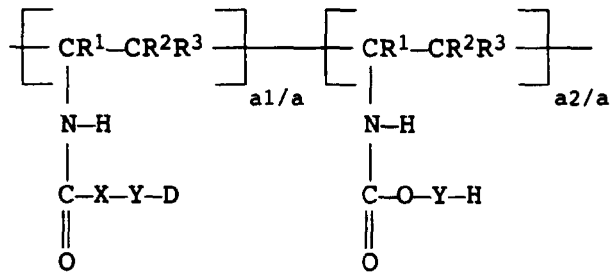

where

a1/a and a2/a are each from 0.1 to 0.9 and
a1 + a2 = a.

**3.** A copolymer as claimed in claim 1 or 2, wherein $R^6$ is phenyl or benzyl, each of which is unsubstituted or substituted by 1 to 4 $C_1$-$C_6$-alkyl or $C_1$-$C_6$-alkoxy groups, or is phenethyl, diphenylmethyl, naphthyl, carbazoyl, isobornyl, adamantyl or 9-fluorenyl.

**4.** A copolymer as claimed in any of claims 1 to 3, wherein $R^1$, $R^2$, $R^3$, $R^4$ and $R^5$ are each hydrogen.

**5.** A process for the preparation of a copolymer as claimed in claim 1 by reacting from 30 to 70 mol% of a compound of the formula III

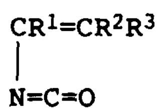

III,

with from 30 to 70 mol% of a compound of the formula IV

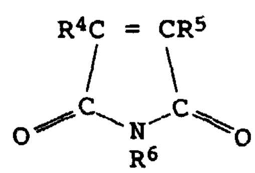

IV

and, if required, up to 30 mol% of further monomers which differ from the compounds III and IV, in the presence of a free radical initiator, and subsequently reacting the resulting copolymer with a compound H-X-Y-Z.

**6.** Use of a copolymer as claimed in any of claims 1 to 4 in nonlinear optics.

### Revendications

**1.** Copolymères à base d'imides d'acides dicarboxyliques, d'isocyanates d'alcényle et/ou d'alcényluréthannes, de formule générale I

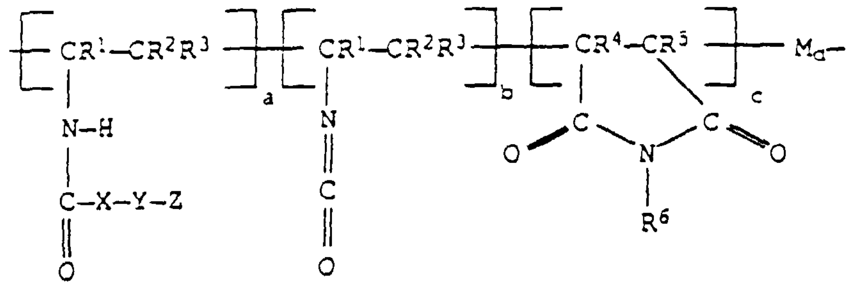

I

dans laquelle

- $R^1$, $R^2$, $R^3$, $R^4$ et $R^5$ représentent chacun, indépendamment les uns des autres, un atome d'hydrogène ou un reste alkyle en $C_1$-$C_{20}$ contenants éventuellement des hétéroatomes et/ou éventuellement substitué;
- $R^6$ représente un atome d'hydrogène, un reste alkyle en $C_1$-$C_{10}$ qui est éventuellement substitué par un groupement phényle ou hydroxy, un reste cycloalkyle en $C_3$-$C_8$, phényle, benzyle, phenyle ou benzyle substitué par 1 à 4 groupements alkyle en $C_1$-$C_6$ ou alcoxy en $C_1$-$C_6$, un reste phenéthyle, diphenylméthyle, naphtyle, carbazoyle, isobornyle, adamantyle, 9-fluorényle;
- X représente O ou NH;
- Y représente un reste méthylène, éthylène, propylène, isopropylène, alkylène en $C_4$-$C_{20}$ à chaîne droite ou ramifié,

$$-(CH_2-O)_n-,$$

$$-(CH_2-CH_2-O)_n-,$$ 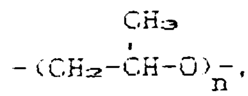

avec n = 1 à 15

- Z représente un atome d'hydrogène ou un reste D éventuellement substitué, ayant des propriétés optiques non linéaires;
- M représente un monomère copolymérisable quelconque, et

$$a + b + c + d = 1,$$

a pouvant être compris entre 0,3 et 0,7,
b entre 0 et 0,3,
entre 0,3 et 0,7 et
d entre 0 et 0,3,

**2.** Copolymères selon la revendication 1, caractérisés en ce que

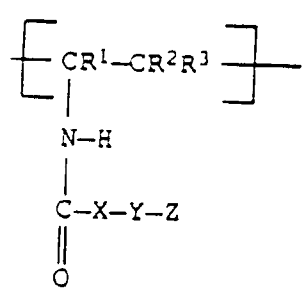

a la signification

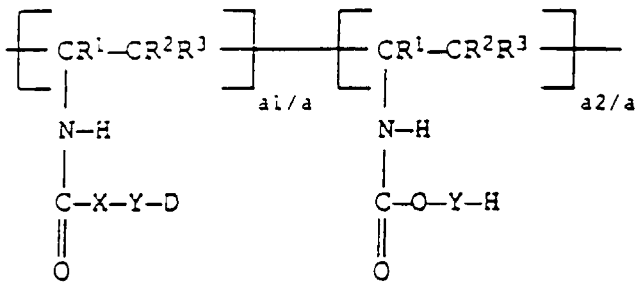

a1/a étant compris entre 0,1 et 0, 9,
a2/a étant compris entre 0,1 et 0,9, et
a1 + a2 = a.

3. Copolymères selon la revendication 1 ou 2, caractérisés en ce que $R^6$ représente un reste phényle, benzyle, phényle ou benzyle substitué par 1 à 4 groupements alkyle en $C_1$-$C_6$ ou alcoxy en $C_1$-$C_6$, un reste phénéthyle, diphénylmethyle, naphtyle, carbazoyle, isobornyle, adamantyle, ou 9-fluorényle.

4. Copolymères selon l'une quelconque des revendications 1 à 3, caractérisés en ce que $R^1$, $R^2$, $R^3$, $R^4$ et $R^5$ représentent des atomes d'hydrogène.

5. Procédé de préparation de copolymères selon la revendication 1 par réaction de 30 à 70% en moles de composée de formule générale III

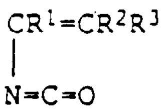

III,

avec 30 à 70% en moles de composés de formule générale IV

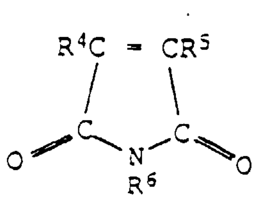

IV,

et éventuellement avec 30% en moles au maximum d'autres monomères différents des composés III et IV, en présence d'amorceurs radicalaires, suivie de réaction du copolymère obtenu avec des composés H-X-Y-Z.

6. Utilisation de copolymères selon l'une quelconque des revendications 1 à 4 en optique non linéaire.